# EUROPEAN PATENT SPECIFICATION

(11) **EP 2 998 053 B1**
(45) Date of publication and mention of the grant of the patent: **23.02.2022**
(21) Application number: 15186284.4
(22) Date of filing: 22.09.2015
(51) Int. Cl.: B23C 5/06, B23C 5/20

(54) **ROTARY CUTTING TOOL AND REVERSIBLE CUTTING INSERT HAVING VARIABLE-WIDTH MINOR RELIEF SURFACES THEREFOR**
ROTATIONSSCHNEIDWERKZEUG UND REVERSIBLER SCHNEIDEINSATZ MIT BREITENVARIABLEN NEBENFREIFLÄCHEN HIERFÜR
OUTIL DE COUPE ROTATIF ET PLAQUETTE DE COUPE RÉVERSIBLE AYANT DES SURFACES DE DÉPOUILLE MINEURES AVEC LARGEUR VARIABLE

(30) Priority: 02.10.2014 DE 102014014722; 22.09.2014 US 201414492761
(43) Date of publication of application: 23.03.2016
(73) Proprietor: ISCAR LTD., Tefen 24959 (IL)
(72) Inventor: Ballas, Assaf, 24653 Akko (IL)
(74) Representative: Vossius & Partner Patentanwälte Rechtsanwälte mbB

(56) References cited:
- DE-A1-102008 001 898
- GB-A- 1 171 671
- US-A- 3 955 259
- US-B2- 8 708 616

## Description

### FIELD OF THE INVENTION

The present invention relates to cutting inserts and cutting tools for use in metal cutting processes, in general, and to rotary cutting tools having reversible cutting inserts for milling operations, in particular.

### BACKGROUND OF THE INVENTION

Within the field of rotary cutting tools used in milling operations, there are many examples of reversible cutting inserts being removably secured in a cutting body. In some instances, these cutting tools are configured to perform square shoulder milling operations.

GB 1 171 671 discloses a reversible cutting element according to the preamble of claim 1.

US 2013/0004251 discloses an indexable insert having a triangular shape with a top surface and a bottom surface, as well as a circumferential surface which connects said surfaces, and cutting edges around the corners. Main cutting edges are present on the top surface and on the bottom surface along the longitudinal edges. Each main cutting edge has a shorter secondary cutting edge, only associated with that main cutting edge. The secondary cutting edges, figuratively speaking, are formed by trimming the corners in each case proceeding from the top surface and the bottom surface. The secondary cutting edges adjoin two main cutting edges and extend at different angles with respect to the same.

US 8,708,616, commonly owned with the present invention, discloses a reversible cutting insert having two opposing end surfaces interconnected by a continuous peripheral surface, including three side surfaces alternating with three corner surfaces. The side and corner surfaces intersect with both end surfaces at side and corner edges, respectively, with each side edge having a major cutting edge, and each corner edge having a corner and minor cutting edge. Each major and minor cutting edge slopes away from first and second end points, respectively, of its mutually associated corner cutting edge, towards a median plane. A minor relief surface associated with each minor cutting edge is perpendicular to the median plane and has a constant width.

It is an object of the present invention to provide a cutting insert and cutting tool which promotes improved surface finish of a workpiece being machined.

It is also an object of the present invention to provide an improved cutting insert with a compact minor relief surface and a relatively long minor cutting edge or wiper.

It is a further object of the present invention to provide an improved cutting insert having two major cutting edges per side surface.

It is yet a further object of the present invention to provide an improved cutting insert having robust cutting edges.

It is yet still a further object of the present invention to provide an improved cutting tool capable of performing square shoulder milling operations.

### SUMMARY OF THE INVENTION

In accordance with one aspect of the present invention, there is provided a reversible cutting insert, comprising:
opposing first and second end surfaces interconnected by a continuous peripheral surface, with a median plane located between the first and second end surfaces and intersecting the peripheral surface to form an insert boundary line, and an insert axis perpendicular to the median plane about which the cutting insert is indexable,
the peripheral surface including three side surfaces alternating with three corner surfaces,
the side and corner surfaces intersecting both the first and second end surfaces at side and corner edges, respectively, with each side edge having a major cutting edge, and each corner edge having a corner and minor cutting edge, and
each corner surface having two minor relief surfaces, each minor relief surface extending away from its associated minor cutting edge,
wherein a first imaginary straight line extending perpendicular to the median plane and intersecting any one of the corner cutting edges at any point along its length, passes through the median plane inside the insert boundary line, and
wherein:
   each minor cutting edge has a projected minor cutting length, in an end view of the cutting insert along the insert axis,
   each minor relief surface has a minor relief width between two lateral boundary points of the minor relief surface contained in a horizontal plane perpendicular to the insert axis, the minor relief width varying with an offset distance between the horizontal plane and the median plane, and
   each projected minor cutting length is greater than the maximum minor relief width of its associated minor relief surface.

In accordance with another aspect of the invention, there is provided a cutting tool rotatable about a tool axis, comprising a cutting body having an insert receiving pocket, and at least one reversible indexable cutting insert of the sort described above removably secured in the insert receiving pocket.

### BRIEF DESCRIPTION OF THE DRAWINGS

For a better understanding, the invention will now be described, by way of example only, with reference to the accompanying drawings in which chain-dash lines represent cut-off boundaries for partial views of a member and in which:
Fig. 1 is a perspective view of a cutting insert in accordance with some embodiments of the present invention;
**Fig. 2a** is an end view of the cutting insert shown in Fig. 1;
**Fig. 2b** is a detailed end view of the cutting insert shown in Fig. 1;
**Fig. 3a** is a corner side view of the cutting insert shown in Fig. 2a, viewed along a first vertical plane **PV1**;
**Fig. 3b** is a detailed corner side view of the cutting insert shown in Fig. 3a;
**Fig. 4** is a side view of the cutting insert shown in Fig. 2a, viewed along a second vertical plane **PV2;**
**Fig. 5** is a partial cross-sectional view of the cutting insert shown in Fig. 2b, taken along the line V-V;
**Fig. 6** is a partial cross-sectional view of the cutting insert shown in Fig. 2b, taken along the line VI-VI;
**Fig. 7** is a partial cross-sectional view of the cutting insert shown in Fig. 2b, taken along the line VII-VII;
**Fig. 8** is a perspective view of a cutting tool in accordance with some embodiments of the present invention;
**Fig. 9** is side view of the cutting tool shown in Fig. 8;
**Fig. 10** is an end view of the cutting tool shown in Fig. 8; and
**Fig. 11** is a diagrammatical representation of the contour lines inscribed by the operative cutting edges of the cutting tool shown in Fig. 10, in a radial plane **Pr.**

### DETAILED DESCRIPTION OF THE INVENTION

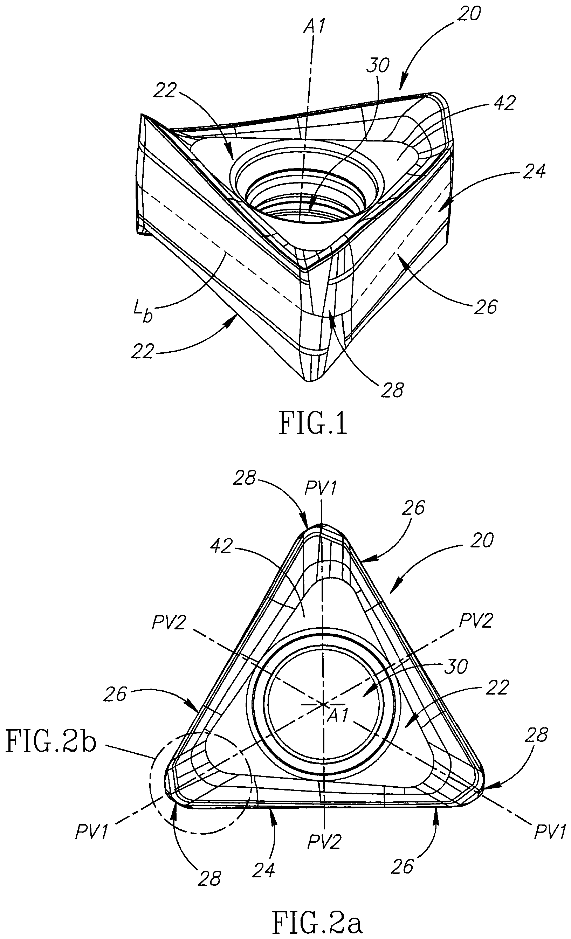

The present invention relates to a reversible cutting insert **20,** as shown in Figs. 1 and 2a, having opposing first and second end surfaces **22** interconnected by a continuous peripheral surface **24,** the peripheral surface **24** including three side surfaces **26** alternating with three corner surfaces **28.**

In some embodiments of the present invention, the cutting insert **20** may preferably be manufactured by form pressing and sintering a cemented carbide, such as tungsten carbide, and may be coated or uncoated.

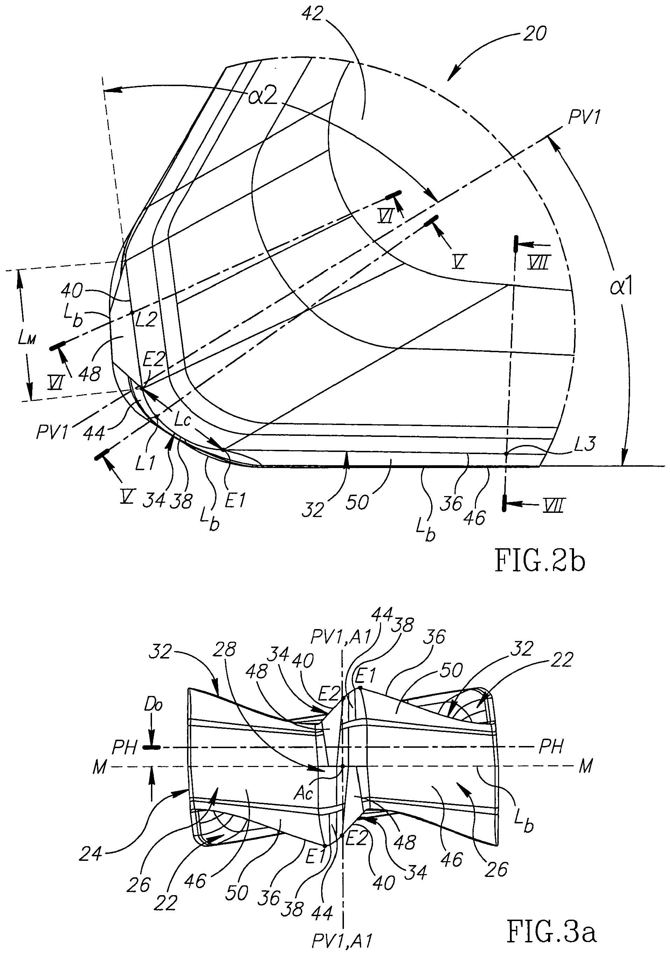

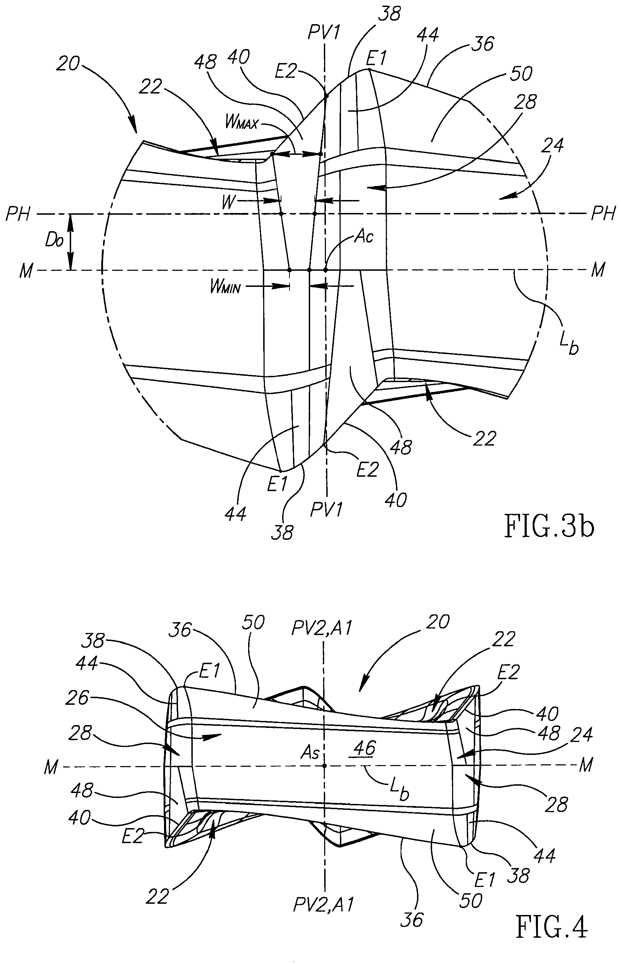

As shown in Figs. 3a and 4, the cutting insert **20** has a median plane **M** located between the first and second end surfaces **22** and intersecting the peripheral surface **24** to form an insert boundary line Lb**.**

In some embodiments of the present invention, the cutting insert **20** may be configured such that in an end view, as shown in Fig. 2a, no portion of the cutting insert **20** extends beyond the insert boundary line **Lb.**

As shown in Figs. 3a and 4, the cutting insert **20** has an insert axis **A1** perpendicular to the median plane **M** about which the cutting insert **20** is indexable.

In some embodiments of the present invention, a through bore **30** coaxial with the insert axis **A1** may extend between and open out at both the first and second end surfaces **22.**

Also in some embodiments of the present invention, the three side surfaces **26** may be identical, and the three corner surfaces **28** may be identical.

Further, in some embodiments of the present invention, the peripheral surface **24** may have exactly three side surfaces **26** alternating with exactly three corner surfaces **28,** and the cutting insert **20** may exhibit three-fold rotational symmetry about the insert axis **A1**.

As shown in Fig. 2a, the cutting insert **20** may have the basic shape of an equilateral triangle, in an end view.

In some embodiments of the present invention, the cutting insert **20** may be manufactured by direct pressing along the direction of the insert axis **A1**.

Also in some embodiments of the present invention, the cutting insert **20** may be pressed into its final shape, and the peripheral surface **24** may be unground.

As shown in Figs. 3a and 4, the side and corner surfaces **26, 28** intersect with both the first and second end surfaces **22** at side and corner edges **32, 34,** respectively, with each side edge **32** having a major cutting edge **36,** and each corner edge **34** having a corner and minor cutting edge **38, 40.**

Thus, the cutting insert **20** is advantageously configured with two major cutting edges **36** per side surface **26,** and two corner and minor cutting edges **38, 40** per corner surface **28,** and thus for embodiments exhibiting three-fold rotational symmetry about the insert axis **A1**, the cutting insert **20** has a total of six major, corner and minor cutting edges **36, 38, 40.**

In some embodiments of the present invention, as shown in Figs. 2a and 2b, in an end view of the cutting insert **20** along the insert axis **A1**, each corner cutting edge **38** may be curved and each minor cutting edge **40** may be straight.

Also in some embodiments of the present invention, the first and second end surfaces **22** may be identical, each having a support surface **42** substantially parallel to the median plane **M.**

Further, in some embodiments of the present invention, the two support surfaces **42** may be equidistant from the median plane **M.**

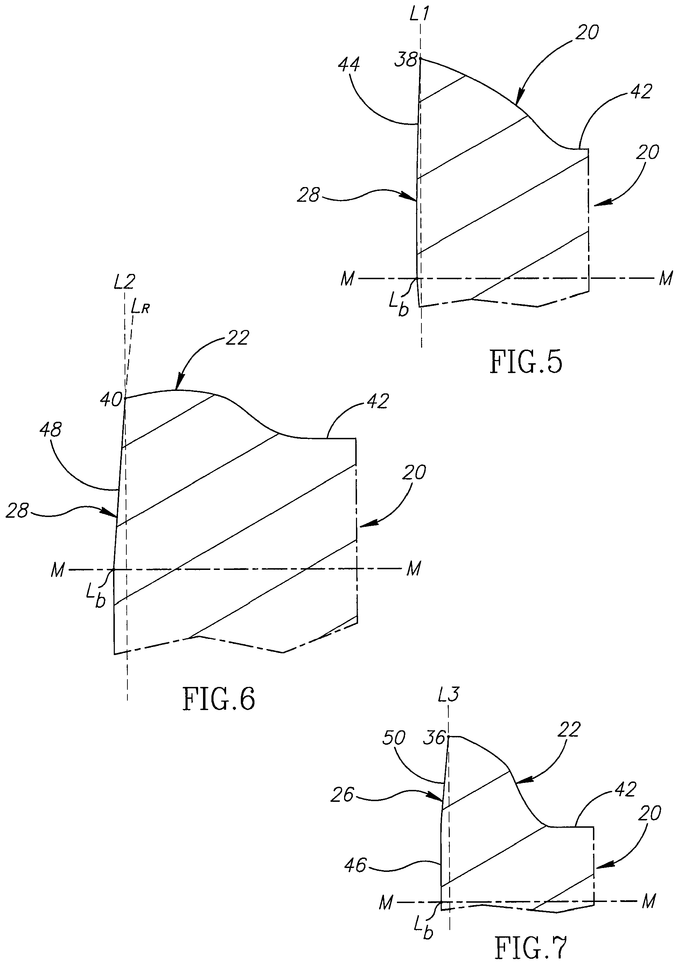

As shown in Fig. 5, each corner cutting edge **38** may be entirely located further from the median plane **M** than each of the support surfaces **42.**

In some embodiments of the present invention, each corner surface **28** may include two partially conical shaped corner relief surfaces **44,** each corner relief surface **44** extending away from its associated corner cutting edge **38.**

It should be appreciated that each partially conical shaped corner relief surface **44,** also known as a 'reversed' relief surface, generally extends outwardly (i.e., in a direction away from the insert axis **A1**) from its associated corner cutting edge **38** towards the median plane **M,** so that each corner cutting edge **38** is beneficially supported and advantageously robust.

As shown in Figs. 2b and 5, a first imaginary straight line **L1** extending perpendicular to the median plane **M** and intersecting any one of the corner cutting edges **38** at any point along its length, passes through the median plane **M** inside the insert boundary line **Lb.**

It should be appreciated that the first imaginary straight line **L1** appears as a point in an end view of the cutting insert **20,** as shown in Fig. 2b.

As shown in Fig. 2a, each corner surface **28** is bisected by a first vertical plane **PV1** containing the insert axis **A1**, and each side surface **26** is bisected by a second vertical plane **PV2** containing the insert axis **A1**.

In some embodiments of the present invention, each first vertical plane **PV1** may be coplanar with one of the second vertical planes **PV2.**

Also in some embodiments of the present invention, each side surface **26** may have a planar side median region **46** perpendicular to the median plane **M.** As seen in Fig. 2b, each side median region **46** may form an acute first angle **α1** with the first vertical plane **PV1** of an adjacent corner surface **28,** and the first angle **α1** may have a value of 30°.

Further, in some embodiments of the present invention, each minor cutting edge **40** may form an acute second angle **α2** with its associated first vertical plane **PV1** (see Fig. 2b), and the second angle **a2** may have a value of between 60° and 80°.

As shown in Figs. 3 and 4, respectively, the median plane **M** intersects each first vertical plane **PV1** to form a corner axis **Ac,** and the median plane **M** intersects each second vertical plane **PV2** to form a side axis **As.**

In some embodiments of the present invention, each corner surface **28** may exhibit two-fold rotational symmetry about its associated corner axis **Ac.**

Also in some embodiments of the present invention, each side surface **26** may exhibit two-fold rotational symmetry about its associated side axis **As.**

As shown in Fig. 3b, each corner surface **28** has two minor relief surfaces **48,** each minor relief surface **48** extending away from its associated minor cutting edge **40** and having a minor relief width **W** between two lateral boundary points of the minor relief surface **48** contained in a horizontal plane **PH** perpendicular to the insert axis **A1**.

It should be appreciated that the lateral boundary points of the minor relief surface **48** are points which laterally border other sub-surfaces of the peripheral surface **24.**

In some embodiments of the present invention, as shown in Fig. 6, an imaginary straight relief line **L_{R}** coplanar with the insert axis **A1** and tangential to any point on or coincident with each minor relief surface **48** may converge towards the insert axis **A1** in the same direction that its associated end surface **22** faces. Thus, each minor relief surface **48,** also known as a 'reversed' relief surface, is beneficially supported and advantageously robust.

As shown in Figs. 2b and 6, a second imaginary straight line **L2** extending perpendicular to the median plane **M** and intersecting any one of the minor cutting edges **40** at any point along its length, may pass through the median plane **M** inside the insert boundary line **Lb.**

It should be appreciated that the second imaginary straight line **L2** appears as a point in an end view of the cutting insert **20,** as shown in Fig. 2b.

In some embodiments of the present invention, each minor relief surface **48** may be planar.

Also in some embodiments of the present invention, the two minor relief surfaces **48** associated with each corner surface **28** may be spaced apart.

In an end view of the cutting insert **20** along the insert axis **A1**, as shown in Fig. 2b, each minor cutting edge **40** has a projected minor cutting length **L_{M}**.

It should be appreciated that the projected minor cutting length **L_{M}** of each minor cutting edge **40** is the shortest distance measured between its two end points, when projected onto an imaginary plane perpendicular to the insert axis **A1**.

According to the present invention, the minor relief width **W** varies with an offset distance **D**o between the horizontal plane **PH** and the median plane **M,** and each projected minor cutting length **L_{M}** is greater than the maximum minor relief width **W_{MAX}** of its associated minor relief surface **48.** This contrasts with the aforementioned US 8,708,616, in which the minor relief surfaces associated with each minor cutting edge has a constant width.

In some embodiments of the present invention, the minor relief width **W** varies continuously with the offset distance **Do,** while in a subset of these embodiments the minor relief width **W** varies continuously linearly with the offset distance **Do.**

It should be appreciated that each minor cutting edge **40** can also be referred to as a wiper, and by configuring the projected minor cutting length **L_{M}** of each minor cutting edge **40** to be greater than the maximum minor relief width **W_{MAX}** of its associated minor relief surface **48,** promotes improved surface finish of a workpiece being machined using the cutting insert **20.**

In some embodiments of the present invention, the minor relief width **W** may increase as the offset distance **Do** increases.

It should be appreciated that by configuring the minor relief width **W** to increase as the offset distance **Do** increases, advantageously results in a compact minor relief surface **48** and a relatively long minor cutting edge **40** or wiper.

Also, in some embodiments of the present invention, the minimum minor relief width **W_{MIN}** of each minor relief surface **48** may occur at an offset distance **Do** having a value equal to zero.

As shown in Fig. 3, each corner cutting edge **38** extends between first and second end points **E1**, **E2.**

In some embodiments of the present invention, each corner cutting edge **38** may have a projected corner cutting length **Lc,** in an end view of the cutting insert **20** along the insert axis **A1**, as shown in Fig. 2b, and the projected minor cutting length **L_{M}** of each minor cutting edge **40** may be greater than the projected corner cutting length **Lc** of its associated corner cutting edge **38.**

It should be appreciated that the projected corner cutting length **Lc** of each corner cutting edge **38** is the shortest distance measured between its first and second end points **E1**, **E2,** when projected onto an imaginary plane perpendicular to the insert axis **A1**.

In some embodiments of the present invention, as shown in Figs. 2b and 3b, each second end point **E2** may be coincident with an end point of its associated minor cutting edge 40.

Also in some embodiments of the present invention, as shown in Fig. 3b, each major and minor cutting edge **36, 40** may slope away from the first and second end points **E1**, **E2,** respectively, of an associated corner cutting edge **38,** towards the median plane **M.**

Further, in some embodiments of the present invention, each major cutting edge **36** may slope away from its mutually associated corner cutting edge **38** towards the median plane **M** along its entire length.

Yet further, in some embodiments of the present invention, each major cutting edge **36** may intersect its associated second vertical plane **PV2.** For these embodiments, it can be understood that each major cutting edge **36** extends along greater than half the peripheral length of its associated side surface **26.**

Yet still further, in some embodiments of the present invention, each major cutting edge **36** may include a straight portion, merging with its associated corner cutting edge **38,** at the first end point **E1**.

As shown in Fig. 4, each side surface **26** has two major relief surfaces **50,** each major relief surface **50** extending away from its associated major cutting edge **36.**

It should be appreciated that each major relief surface **50,** also known as a 'reversed' relief surface, generally extends outwardly (i.e., in a direction away from the insert axis **A1**) from its associated major cutting edge **36** towards the median plane **M,** so that each major cutting edge **36** is beneficially supported and advantageously robust.

As shown in Figs. 2b and 7, a third imaginary straight line **L3** extending perpendicular to the median plane **M** and intersecting any one of the major cutting edges **36** at any point along its length, may pass through the median plane **M** inside the insert boundary line **Lb.**

It should be appreciated that the third imaginary straight line **L3** appears as a point in an end view of the cutting insert **20,** as shown in Fig. 2b.

As shown in Fig. 3b, each minor cutting edge **40** may slope away from its mutually associated corner cutting edge **38** towards the median plane **M** along its entire length.

In some embodiments of the present invention, as shown in Fig. 3b, each minor cutting edge **40** may intersect its associated first vertical plane **PV1**.

Also in some embodiments of the present invention, the two corner cutting edges **38** associated with each corner surface **28** may each be entirely located on opposite sides of the associated first vertical plane **PV1**.

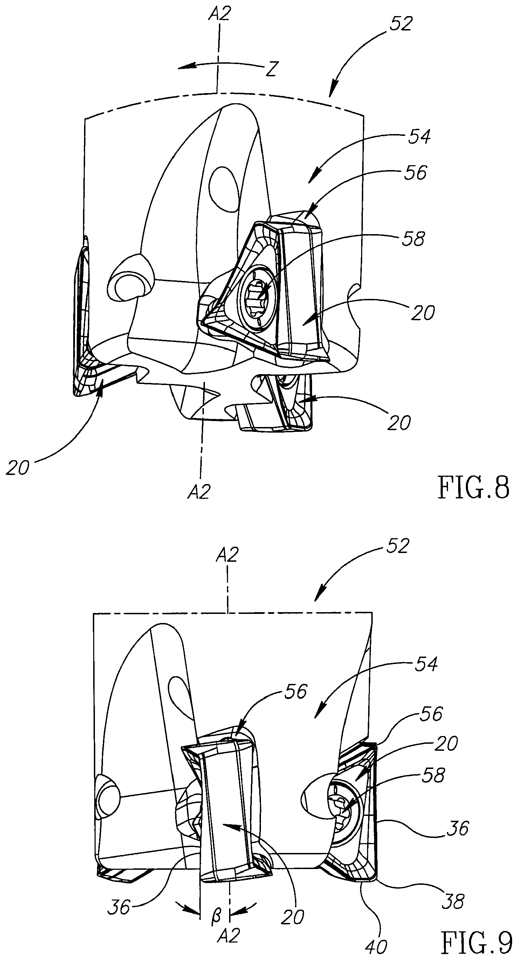

As shown in Figs. 8 to 11, the present invention also relates to a cutting tool **52** rotatable about a tool axis **A2**, in a direction of rotation **Z,** having a cutting body **54** and at least one of the aforementioned reversible cutting inserts **20.** Each cutting insert **20** is removably secured in an insert receiving pocket **56** of the cutting body **54.**

In some embodiments of the present invention, each cutting insert **20** may be removably secured in the insert receiving pocket **56** by means of a clamping screw **58** passing through its through bore **30,** and threadingly engaging a screw bore (not shown) in a seating surface (not shown) of the insert receiving pocket **56.**

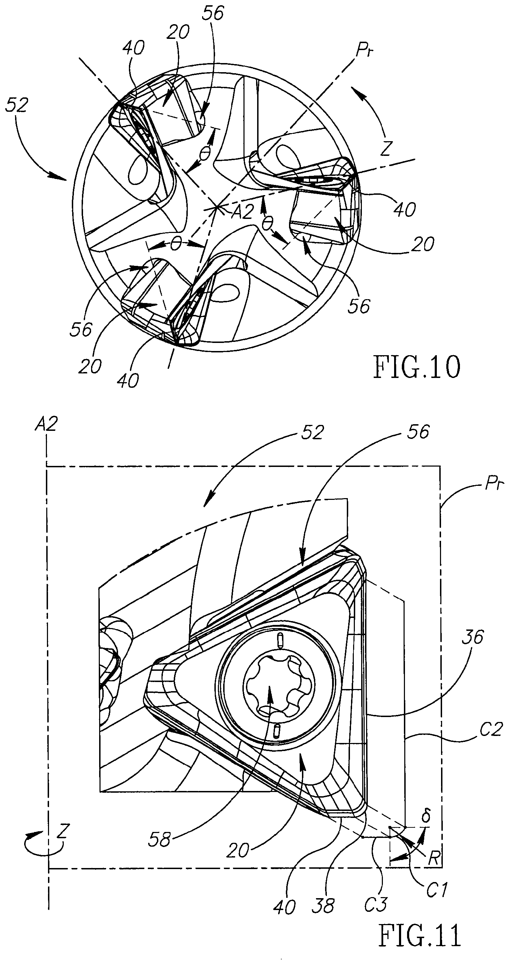

As shown in Fig. 11, each cutting insert **20** may be configured within the cutting tool **52** so that during rotation of the cutting tool **52** about its tool axis **A2**, the operative corner cutting edge **38** inscribes an arc-shaped first contour line **C1** in a radial plane **Pr** containing the tool axis **A2,** with the first contour line **C1** having a constant radius of curvature **R** subtending a corner cutting angle **δ** of 90°.

Also, as shown in Fig. 11, each cutting insert **20** may be configured within the cutting tool **52** so that during rotation of the cutting tool **52** about its tool axis **A2**, the operative major and minor cutting edges **36, 40** inscribe straight second and third contour lines **C2, C3,** respectively, in the radial plane **Pr,** with the second contour line **C2** substantially parallel to the tool axis **A2** and the third contour line **C3** substantially perpendicular to the tool axis **A2**.

Throughout the description, it should be appreciated that the parallelity and perpendicularity of the second and third contour lines **C2, C3,** respectively, with respect to the tool axis **A2** have an accuracy tolerance of 0.5°.

In some embodiments of the present invention, the rotary cutting tool **52** may be used for milling operations.

It should be appreciated that during a milling operation, the operative comer cutting edge **38** cuts a corner in a workpiece (not shown) having a constant radius of curvature **R** subtending a corner cutting angle **δ** of 90°, advantageously resulting in reduced stress concentrations at the corner, and thus minimizing its risk of fracture.

It should also be appreciated that during a milling operation, the major 'reversed' relief surfaces **50** beneficially provide the trailing non-operative major cutting edges **36** of each reversible cutting insert **20** with greater clearance from the workpiece, thus advantageously enabling their arrangement on relatively smaller diameter cutting tools **52.**

In some embodiments of the present invention, as can be readily understood from Fig. 11, each cutting insert **20** may be configured within the cutting tool **52,** so that the operative major, corner and minor cutting edges **36, 38, 40** perform a square, or 90°, shoulder milling operation in the workpiece.

It should be appreciated that during a square, or 90°, shoulder milling operation, the height of the machined shoulder is not limited by the cutting insert **20.**

In some embodiments of the present invention, as shown in Figs. 9 and 10, each cutting insert **20** may be configured within the cutting tool **52,** so that the operative major cutting edge **36** has a positive axial rake angle **β**, and the operative minor cutting edge **40** has a positive radial rake angle **θ**.

It should be appreciated that by providing the operative major and minor cutting edges **36, 40** with positive axial and radial rake angles **β**, **θ**, respectively, lower cutting forces are generated, the machine spindle requires less operating power, and the workpiece undergoes a smoother cutting action. Also the cutting chips produced are advantageously evacuated way from the operative cutting edges.

Although the present invention has been described to a certain degree of particularity, it should be understood that various alterations and modifications could be made without departing from the scope of the invention as hereinafter claimed.

## Claims

1. A reversible cutting insert (20), comprising:
opposing first and second end surfaces (22) interconnected by a continuous peripheral surface (24), with a median plane (M) located between the first and second end surfaces (22) and intersecting the peripheral surface (24) to form an insert boundary line (Lb), and an insert axis (A1) perpendicular to the median plane (M) about which the cutting insert (20) is indexable,
the peripheral surface (24) including three side surfaces (26) alternating with three corner surfaces (28),
the side and corner surfaces (26, 28) intersecting both the first and second end surfaces (22) at side and corner edges (32, 34), respectively, with each side edge (32) having a major cutting edge (36), and each corner edge (34) having a corner and minor cutting edge (38, 40), and
each corner surface (28) having two minor relief surfaces (48), each minor relief surface (48) extending away from its associated minor cutting edge (40),
wherein:
each minor cutting edge (40) has a projected minor cutting length (L_{M}), in an end view of the cutting insert (20) along the insert axis (A1), and
each minor relief surface (48) has a minor relief width (W) between two lateral boundary points of the minor relief surface (48) contained in a horizontal plane (PH) perpendicular to the insert axis (A1), the minor relief width (W) varying with an offset distance (Do) between the horizontal plane (PH) and the median plane (M),
**characterized in that**
each projected minor cutting length (L_{M}) is greater than the maximum minor relief width (W_{MAX}) of its associated minor relief surface (48), and
a first imaginary straight line (L1) extending perpendicular to the median plane (M) and intersecting any one of the corner cutting edges (38) at any point along its length, passes through the median plane (M) inside the insert boundary line (Lb).

2. The cutting insert (20) according to claim 1, wherein the minor relief width (W) increases as the offset distance (Do) increases.

3. The cutting insert (20) according to claim 1 or 2, wherein the minimum minor relief width (W_{MIN}) of each minor relief surface (48) occurs at an offset distance (Do) having a value equal to zero.

4. The cutting insert (20) according to any of the preceding claims, wherein each corner cutting edge (38) extends between first and second end points (E1, E2), and
wherein each major and minor cutting edge (36, 40) slopes away from the first and second end points (E1, E2), respectively, of an associated corner cutting edge (38), towards the median plane (M),
preferably wherein each major cutting edge (36) slopes away from the first end point (E1) towards the median plane (M) along its entire length,
more preferably wherein each side surface (26) is bisected by a second vertical plane (PV2) containing the insert axis (A1), and wherein each major cutting edge (36) intersects its associated second vertical plane (PV2).

5. The cutting insert (20) according to claim 4, wherein each minor cutting edge (40) slopes away from the second end point (E2) towards the median plane (M) along its entire length.

6. The cutting insert (20) according to any of the preceding claims, wherein each corner cutting edge (38) has a projected corner cutting length (Lc), in an end view of the cutting insert (20) along the insert axis (A1), and
wherein the projected minor cutting length (L_{M}) of each minor cutting edge (40) is greater than the projected corner cutting length (Lc) of its associated corner cutting edge (38).

7. The cutting insert (20) according to any of the preceding claims, wherein a second imaginary straight line (L2) extending perpendicular to the median plane (M) and intersecting any one of the minor cutting edges (40) at any point along its length, passes through the median plane (M) inside the insert boundary line (Lb).

8. The cutting insert (20) according to any of the preceding claims, wherein an imaginary straight relief line (L_{R}) coplanar with the insert axis (A1) and tangential to any point on or coincident with each minor relief surface (48) converges towards the insert axis (A1) in the same direction that its associated end surface (22) faces.

9. The cutting insert (20) according to any of the preceding claims, wherein a third imaginary straight line (L3) extending perpendicular to the median plane (M) and intersecting any one of the major cutting edges (36) at any point along its length, passes through the median plane (M) inside the insert boundary line (Lb).

10. The cutting insert (20) according to any of the preceding claims,
wherein each corner cutting edge (38) is curved and each minor cutting edge (40) is straight, in an end view of the cutting insert (20) along the insert axis (A1), and/or
wherein each minor relief surface (48) is planar.

11. The cutting insert (20) according to any of the preceding claims, wherein the peripheral surface (24) has exactly three side surfaces (26) alternating with exactly three corner surfaces (28), and
wherein the cutting insert (20) exhibits three-fold rotational symmetry about the insert axis (A1).

12. The cutting insert (20) according to any of the preceding claims, wherein each side surface (26) has a planar side median region (46) perpendicular to the median plane (M),
wherein each corner surface (28) is bisected by a first vertical plane (PV1) containing the insert axis (A1), and
wherein each side median region (46) forms an acute first angle (α1) with the first vertical plane (PV1) of an adjacent corner surface (28), and the first angle (α1) has a value of 30°,
preferably wherein the two corner cutting edges (38) associated with each corner surface (28) are each entirely located on opposites sides of the associated first vertical plane (PV1).

13. The cutting insert (20) according to any of the preceding claims, wherein the peripheral surface (24) is unground.

14. The cutting insert (20) according to any of the preceding claims, wherein each corner surface (28) has two partially conical shaped corner relief surfaces (44), each corner relief surface (44) extending away from its associated corner cutting edge (38).

15. A cutting tool (52) rotatable about a tool axis (A2), comprising:
a cutting body (54); and
at least one reversible cutting insert (20) in accordance with claim 1 removably secured in an insert receiving pocket (56) of the cutting body (54).

## Patentansprüche

1. Reversibler Schneideinsatz (20), der aufweist:
eine erste und eine gegenüberliegende zweite Endfläche (22), die durch eine kontinuierliche Umfangsfläche (24) miteinander verbunden sind, wobei eine Medianebene (M) zwischen der ersten und zweiten Endfläche (22) liegt und die Umfangsfläche (24) schneidet, um eine Einsatzgrenzlinie (Lb) zu bilden, und eine Einsatzachse (A1) senkrecht zur Medianebene (M), um die der Schneideinsatz (20) fortschaltbar ist,
wobei die Umfangsfläche (24) drei Seitenflächen (26) aufweist, die sich mit drei Eckenflächen (28) abwechseln,
die Seiten- und Eckenflächen (26, 28) sowohl die erste als auch die zweite Endfläche (22) an Seiten- bzw. Eckenkanten (32, 34) schneiden, wobei jede Seitenkante (32) eine Hauptschneidkante (36) hat und jede Eckenkante (34) eine Ecken- und Nebenschneidkante (38, 40) hat, und
jede Eckenfläche (28) zwei Nebenfreiflächen (48) hat, wobei sich jede Nebenfreifläche (48) von ihrer zugeordneten Nebenschneidkante (40) weg erstreckt,
wobei:
jede Nebenschneidkante (40) eine projizierte Nebenschneidkantenlänge (L_{M}) in Endansicht des Schneideinsatzes (20) entlang der Einsatzachse (A1) hat,
jede Nebenfreifläche (48) eine Nebenfreiflächenbreite (W) zwischen zwei seitlichen Grenzpunkten der Nebenfreifläche (48) hat, die in einer Horizontalebene (PH) senkrecht zur Einsatzachse (A1) enthalten sind, wobei die Nebenfreiflächenbreite (W) mit einem Versatzabstand (Dₒ) zwischen der Horizontalebene (PH) und der Medianebene (M) variiert,
**dadurch gekennzeichnet, dass**
jede projizierte Nebenschneidkantenlänge (L_{M}) größer als die maximale Nebenfreiflächenbreite (W_{MAX}) ihrer zugeordneten Nebenfreifläche (48) ist, und
eine erste gedachte Gerade (L1), die sich senkrecht zur Medianebene (M) erstreckt und irgendeine der Eckenschneidkanten (38) an irgendeinem Punkt über ihre Länge schneidet, die Medianebene (M) innerhalb der Einsatzgrenzlinie (Lb) durchläuft.

2. Schneideinsatz (20) nach Anspruch 1, wobei die Nebenfreiflächenbreite (W) mit zunehmendem Versatzabstand (Dₒ) zunimmt.

3. Schneideinsatz (20) nach Anspruch 1 oder 2, wobei die minimale Nebenfreiflächenbreite (W_{MIN}) jeder Nebenfreifläche (48) bei einem Versatzabstand (Dₒ) mit einem Wert gleich null auftritt.

4. Schneideinsatz (20) nach einem der vorstehenden Ansprüche, wobei sich jede Eckenschneidkante (38) zwischen einem ersten und einem zweiten Endpunkt (E1, E2) erstreckt, und
wobei jede Haupt- und Nebenschneidkante (36, 40) vom ersten bzw. zweiten Endpunkt (E1, E2) einer zugeordneten Eckenschneidkante (38) zur Medianebene (M) abfällt,
vorzugsweise wobei jede Hauptschneidkante (36) vom ersten Endpunkt (E1) zur Medianebene (M) über ihre gesamte Länge abfällt,
stärker bevorzugt wobei jede Seitenfläche (26) durch eine zweite Vertikalebene (PV2) halbiert ist, die die Einsatzachse (A1) enthält, und wobei jede Hauptschneidkante (36) ihre zugeordnete zweite Vertikalebene (PV2) schneidet.

5. Schneideinsatz (20) nach Anspruch 4, wobei jede Nebenschneidkante (40) vom zweiten Endpunkt (E2) zur Medianebene (M) über ihre gesamte Länge abfällt.

6. Schneideinsatz (20) nach einem der vorstehenden Ansprüche, wobei jede Eckenschneidkante (38) eine projizierte Eckenschneidlänge (Lc) in einer Endansicht des Schneideinsatzes (20) entlang der Einsatzachse (A1) hat, und
wobei die projizierte Nebenschneidlänge (L_{M}) jeder Nebenschneidkante (40) größer als die projizierte Eckenschneidlänge (Lc) ihrer zugeordneten Eckenschneidkante (38) ist.

7. Schneideinsatz (20) nach einem der vorstehenden Ansprüche, wobei eine zweite gedachte Gerade (L2), die sich senkrecht zur Medianebene (M) erstreckt und irgendeine der Nebenschneidkanten (40) an irgendeinem Punkt über ihre Länge schneidet, die Medianebene (M) innerhalb der Einsatzgrenzlinie (Lb) durchläuft.

8. Schneideinsatz (20) nach einem der vorstehenden Ansprüche, wobei eine gedachte Freiflächengerade (L_{R}), die koplanar mit der Einsatzachse (A1) und tangential zu irgendeinem Punkt auf oder zusammenfallend mit jeder Nebenfreifläche (48) ist, zur Einsatzachse (A1) in gleicher Richtung konvergiert, in die ihre zugeordnete Endfläche (22) weist.

9. Schneideinsatz (20) nach einem der vorstehenden Ansprüche, wobei eine dritte gedachte Gerade (L3), die sich senkrecht zur Medianebene (M) erstreckt und eine der Hauptschneidkanten (36) an einem Punkt über ihre Länge schneidet, die Medianebene (M) innerhalb der Einsatzgrenzlinie (Lb) durchläuft.

10. Schneideinsatz (20) nach einem der vorstehenden Ansprüche,
wobei in einer Endansicht des Schneideinsatzes (20) entlang der Einsatzachse (A1) jede Eckenschneidkante (38) gekrümmt und jede Nebenschneidkante (40) gerade ist, und/oder
wobei jede Nebenfreifläche (48) eben ist.

11. Schneideinsatz (20) nach einem der vorstehenden Ansprüche, wobei die Umfangsfläche (24) genau drei Seitenflächen (26) hat, die sich mit genau drei Eckenflächen (28) abwechseln und
wobei der Schneideinsatz (20) dreifache Rotationssymmetrie um die Einsatzachse (A1) aufweist.

12. Schneideinsatz (20) nach einem der vorstehenden Ansprüche, wobei jede Seitenfläche (26) einen ebenen Seitenmedianbereich (46) senkrecht zur Medianebene (M) hat,
wobei jede Eckenfläche (28) durch eine erste Vertikalebene (PV1) halbiert ist, die die Einsatzachse (A1) enthält, und
wobei jeder Seitenmedianbereich (46) einen spitzen ersten Winkel (α1) mit der ersten Vertikalebene (PV1) einer benachbarten Eckenfläche (28) bildet und der erste Winkel (α1) einen Wert von 30° hat,
vorzugsweise wobei die beiden Eckenschneidkanten (38), die jeder Eckenfläche (28) zugeordnet sind, jeweils vollständig auf Gegenseiten der zugeordneten ersten Vertikalebene (PV1) liegen.

13. Schneideinsatz (20) nach einem der vorstehenden Ansprüche, wobei die Umfangsfläche (24) ungeschliffen ist.

14. Schneideinsatz (20) nach einem der vorstehenden Ansprüche, wobei jede Eckenfläche (28) zwei teilweise kegelförmige Eckenfreiflächen (44) hat, wobei sich jede Eckenfreifläche (44) von ihrer zugeordneten Eckenschneidkante (38) weg erstreckt.

15. Schneidwerkzeug (52), das um eine Werkzeugachse (A2) rotierbar ist, mit:
einem Schneidkörper (54); und
mindestens einem reversiblen Schneideinsatz (20) nach Anspruch 1, der in einer Einsatzaufnahmetasche (56) des Schneidkörpers (54) entfernbar befestigt ist.

## Revendications

1. Insert de coupe réversible (20), comprenant :
des première et seconde surfaces d'extrémité (22) opposées reliées entre elles par une surface périphérique continue (24), avec un plan médian (M) situé entre les première et seconde surfaces d'extrémité (22) et coupant la surface périphérique (24) pour former une ligne limite d'insert (Lb), et un axe d'insert (A1) perpendiculaire au plan médian (M) autour duquel l'insert de coupe (20) est indexable,
la surface périphérique (24) incluant trois surfaces latérales (26) alternant avec trois surfaces d'angle (28),
les surfaces latérales et d'angle (26, 28) coupant les première et seconde surfaces d'extrémité (22) au niveau de bords latéraux et d'angle (32, 34), respectivement, chaque bord latéral (32) ayant un bord de coupe majeur (36), et chaque bord d'angle (34) ayant un bord de coupe d'angle et mineur (38, 40), et
chaque surface d'angle (28) ayant deux surfaces de relief mineures (48), chaque surface de relief mineure (48) s'étendant en s'éloignant de son bord de coupe mineur (40) associé, où :
chaque bord de coupe mineur (40) a une longueur de coupe mineure projetée (L_{M}), dans une vue d'extrémité de l'insert de coupe (20) le long de l'axe d'insert (A1), et
chaque surface de relief mineure (48) a une largeur de relief mineure (W) entre deux points limites latéraux de la surface de relief mineure (48) contenus dans un plan horizontal (PH) perpendiculaire à l'axe d'insert (A1), la largeur du relief mineure (W) variant avec une distance de décalage (Do) entre le plan horizontal (PH) et le plan médian (M),
**caractérisé en ce que**
chaque longueur de coupe mineure projetée (L_{M}) est supérieure à la largeur de relief mineure maximum (W_{MAX}) de sa surface de relief mineure (48) associée, et
une première ligne droite imaginaire (L1) s'étendant perpendiculairement au plan médian (M) et coupant l'un quelconque des bords de coupe d'angle (38) en un point quelconque le long de sa longueur, traverse le plan médian (M) à l'intérieur de la ligne limite d'insert (Lb).

2. Insert de coupe (20) selon la revendication 1, où la largeur de relief mineure (W) augmente à mesure que la distance de décalage (Do) augmente.

3. Insert de coupe (20) selon la revendication 1 ou 2, où la largeur de relief mineure minimum (W_{MIN}) de chaque surface de relief mineure (48) apparaît à une distance de décalage (Do) ayant une valeur égale à zéro.

4. Insert de coupe (20) selon l'une quelconque des revendications précédentes, où chaque bord de coupe d'angle (38) s'étend entre des premier et second points d'extrémité (E1, E2), et
où chaque bord de coupe majeur et mineur (36, 40) s'incline à partir des premier et second points d'extrémité (E1, E2), respectivement, d'un bord de coupe d'angle (38) associé, vers le plan médian (M),
de préférence où chaque bord de coupe majeur (36) s'incline à partir du premier point d'extrémité (E1) vers le plan médian (M) sur toute sa longueur,
de préférence encore où chaque surface latérale (26) est coupée en deux par un second plan vertical (PV2) contenant l'axe d'insert (A1), et où chaque bord de coupe majeur (36) coupe son second plan vertical associé (PV2).

5. Insert de coupe (20) selon la revendication 4, où chaque bord de coupe mineur (40) s'incline à partir du second point d'extrémité (E2) vers le plan médian (M) sur toute sa longueur.

6. Insert de coupe (20) selon l'une quelconque des revendications précédentes, où chaque bord de coupe d'angle (38) a une longueur de coupe d'angle projetée (Lc), dans une vue d'extrémité de l'insert de coupe (20) le long de l'axe d'insert (A1), et
où la longueur de coupe mineure projetée (LM) de chaque bord de coupe mineur (40) est supérieure à la longueur de coupe d'angle projetée (Lc) de son bord de coupe d'angle (38) associé.

7. Insert de coupe (20) selon l'une quelconque des revendications précédentes, où une seconde ligne droite imaginaire (L2) s'étendant perpendiculairement au plan médian (M) et coupant l'un quelconque des bords de coupe mineurs (40) en un point quelconque de sa longueur, traverse le plan médian (M) à l'intérieur de la ligne limite d'insert (Lb).

8. Insert de coupe (20) selon l'une quelconque des revendications précédentes, où une ligne droite de relief imaginaire (LR) coplanaire avec l'axe d'insert (A1) et tangente à un point quelconque sur ou coïncidant avec chaque surface de relief mineure (48) converge vers l'axe d'insert (A1) dans la même direction à laquelle fait face sa surface d'extrémité (22) associée.

9. Insert de coupe (20) selon l'une quelconque des revendications précédentes, où une troisième ligne droite imaginaire (L3) s'étendant perpendiculairement au plan médian (M) et coupant l'un quelconque des bords de coupe majeurs (36) en un point quelconque le long de sa longueur, traverse le plan médian (M) à l'intérieur de la ligne limite d'insert (Lb).

10. Insert de coupe (20) selon l'une quelconque des revendications précédentes,
où chaque bord de coupe d'angle (38) est incurvé et chaque bord de coupe mineur (40) est rectiligne, dans une vue d'extrémité de l'insert de coupe (20) le long de l'axe d'insert (A1), et/ou
où chaque surface de relief mineure (48) est plane.

11. Insert de coupe (20) selon l'une quelconque des revendications précédentes, où la surface périphérique (24) a exactement trois surfaces latérales (26) alternant avec exactement trois surfaces d'angle (28), et
où l'insert de coupe (20) présente une symétrie de rotation d'ordre trois autour de l'axe d'insert (A1).

12. Insert de coupe (20) selon l'une quelconque des revendications précédentes, où chaque surface latérale (26) a une région médiane latérale plane (46) perpendiculaire au plan médian (M),
où chaque surface d'angle (28) est coupée en deux par un premier plan vertical (PV1) contenant l'axe d'insert (A1), et
où chaque région médiane latérale (46) forme un premier angle aigu (α1) avec le premier plan vertical (PV1) d'une surface d'angle (28) adjacente, et le premier angle (α1) a une valeur de 30°,
de préférence où les deux bords de coupe d'angle (38) associés à chaque surface d'angle (28) sont entièrement situés chacun sur des côtés opposés du premier plan vertical associé (PV1).

13. Insert de coupe (20) selon l'une quelconque des revendications précédentes, où la surface périphérique (24) est non meulée.

14. Insert de coupe (20) selon l'une quelconque des revendications précédentes, où chaque surface d'angle (28) a deux surfaces de relief d'angle de forme partiellement conique (44), chaque surface de relief d'angle (44) s'étendant en s'éloignant de son bord de coupe d'angle (38) associé.

15. Outil de coupe (52) pouvant tourner autour d'un axe d'outil (A2), comprenant :
un corps de coupe (54) ; et
au moins un insert de coupe réversible (20) selon la revendication 1 fixé de manière amovible dans une poche de réception d'insert (56) du corps de coupe (54).
